# EUROPEAN PATENT SPECIFICATION

(11) **EP 2 647 347 B1**
(45) Date of publication and mention of the grant of the patent: **11.10.2017**
(21) Application number: 13162024.7
(22) Date of filing: 02.04.2013
(51) Int. Cl.: A61C 8/00

(54) **Prosthetic attachment**
Prothesenaufbau
Pilier de prothèse

(30) Priority: 02.04.2012 ES 201230506
(43) Date of publication of application: 09.10.2013
(73) Proprietor: Terrats Mecanizados, S.L., 08210 Barberà Del Vallès (ES)
(72) Inventor: Terrats Triquell, Ramón, 08110 Barcelona (ES)
(74) Representative: Sugrañes Patentes y Marcas

(56) References cited:
- EP-A1- 1 021 999
- EP-A1- 1 547 543
- EP-A1- 1 621 156
- US-A- 4 932 868
- US-A- 5 133 662
- US-A- 5 599 185
- US-A1- 2003 224 329
- US-A1- 2010 105 005

## Description

### OBJECT OF THE INVENTION

The purpose of the invention patent application herein is to register a prosthetic attachment that incorporates significant innovations and advantages.

More specifically, the invention proposes the development of a prosthetic attachment comprising a support piece which can be fixed in a dental implant and a mounting assembly which can be coupled to a prosthetic structure (either a single piece or multiple pieces) wherein the joint between the support piece and the mounting assembly is a ball-and-socket type joint according to the preamble of claim 1, which enables the angular positioning of the implant, and can be applied to a conventional or standard dental implant.

### BACKGROUND OF THE INVENTION

The application of dental implants to replace teeth which are essentially made of an implant such as a screw, which is the part that is fixed inside the patient's bone and a dental prosthesis which has the shape of one or more teeth to be replaced has been known for years.

However, depending on the tooth to be replaced with the dental prosthesis and the bone structure of the patient's mouth, sometimes it is not possible to achieve axial alignment between the implant and the dental prosthesis, so there are systems such as those based on fixing conical elements (male-female) alone or in combination with other friction elements, such as telescopic structures. However, this system requires the machining of custom parts, making the process of manufacturing the attachment more complex.

Another known system is that in which a ball and socket joint or similar is arranged between the implant and the dental prosthesis, wherein a non-axial positioning between both parts is also possible.

However, a large majority of these known systems with the purpose mentioned above involve a particular and specific dental implant design that cannot be applied to other conventional or "standard" implants. Examples of known systems are disclosed in for example US5133662, EP1547543, US20030224329 or US4932868.

### DESCRIPTION OF THE INVENTION

The invention herein has been developed with the aim of providing a prosthetic attachment that is considered a novelty within the field of application and resolves the aforementioned drawbacks, further providing other additional advantages that will be apparent from the description detailed hereinafter.

It is therefore an object of this invention to provide a prosthetic attachment comprising a support piece which can be fixed in a dental implant and a mounting assembly which can be coupled to a prosthetic attachment, wherein the joint between the support piece and the mounting assembly is a ball-and-socket type joint. More particularly, the invention is characterised by the fact that the support piece has a connection section having a substantially spherical shape formed by a plurality of radially distributed flexible petals or sectors, and wherein the mounting assembly comprises a primary cavity which has a substantially spherical cavity and is provided with a threaded through hole, through which a screw provided with a spherical head can be inserted, such that the spherical head can be introduced into the inner region of the connection section of the support piece and the wall that forms the substantially spherical cavity of the primary element can be externally adjusted on the connection sector, such that the mounting assembly is rotatively coupled and cannot be detached from the support piece.

It should be noted that when the spherical head in the connection section is in an assembled condition, the geometric centre of the connection section and the substantially spherical cavity of the primary element are coincident.

Thanks to these characteristics, an alternative prosthetic abutment is obtained when compared to the known prior art, which is simply constructed and can be applied in a wide variety of standard-type dental implants, i.e. it does not require the manufacture of a specific dental implant for connection to a specific attachment. This aspect means manufacturing costs can be reduced as specialised manufacturing machinery and programmes are not required.

Furthermore, another no less important advantage is the fact that fusible materials do not need to be applied for the angular positioning of the parts and a predetermined torque as recommended by the manufacturer of the implant can be applied.

It is also an object of the invention herein to facilitate and reduce the time it takes to fit a patient with dental implants.

Additionally, the attachment may include a sleeve which externally surrounds the primary element, the latter being formed by a cylindrical lateral wall and a base provided with a threaded bore and wherein the outer face of the cylindrical lateral wall has annular recesses which facilitate cement retention by applying an adhesive material in the overdenture.

In an alternative embodiment of the invention, an elastic ring located in a housing formed in the inner face of the sleeve which acts as the retaining means between the sleeve and the primary element can be provided.

In a preferred embodiment, the primary element can have a generally frustoconical shape. The inner face of the sleeve can have a degree of inclination with respect to the longitudinal axis of the sleeve which is complementary to the generally frustoconical shape of the primary element.

In the invention, the support piece has a through hole which longitudinally crosses the whole support piece while it is also possible that the support piece has a threaded extension which projects in the opposite direction to the connection section.

Other characteristics and advantages of the attachment, object of the invention herein, will become apparent from the description of a preferred, although not exclusive embodiment, which is illustrated by way of non-limiting example in the drawings appended, in which:

### BRIEF DESCRIPTION OF THE DRAWINGS

Figure 1 .- Sectional elevation view of a first embodiment of the prosthetic attachment in accordance with the invention; herein
Figure 2.- Elevation view of the sectioned prosthetic attachment prior to coupling between the mounting assembly and the support piece in which some parts have been removed for clarity;
Figure 3.- Sectional elevation view of the first embodiment in which the implant is in an inclined position with an inclination angle of 20° with respect to the mounting assembly;
Figure 4 .- Sectional elevation view of a second preferred embodiment of an attachment according to the invention;
Figure 5.- Side elevation view and upper and lower plan view of the support piece, and
Figure 6.- Side elevation view and upper and lower plan view of a second embodiment of the support piece.

### DESCRIPTION OF A PREFERRED EMBODIMENT

In view of the mentioned figures and according to the adopted numbering, an example of a preferred embodiment of the invention can be seen therein, which comprises the parts and elements indicated and described in detail below.

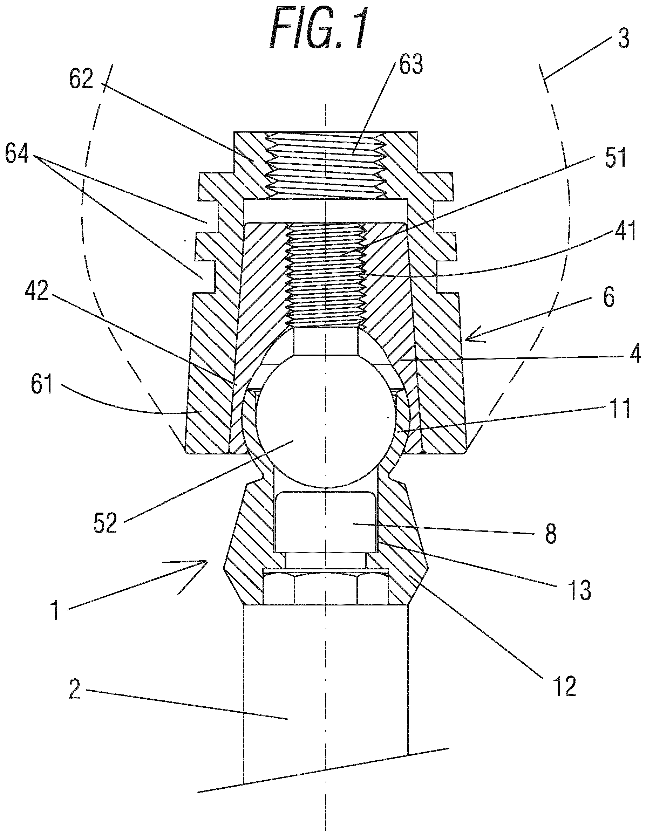

Thus, as can be seen in the Figures, the prosthetic attachment essentially comprises a support piece (1) which can be fixed in a dental implant (2) and a mounting assembly which can be coupled to a prosthetic structure (3) (shown in Figure 1 with broken lines for clarity), which is described in greater detail below.

In particular, the support piece (1) has a connection section (11) having a substantially spherical shape formed by a plurality of radially distributed flexible sectors separated by grooves, and a lower section (12) with a substantially frustoconical outer shape.

The coupling between the support piece (1) and the dental implant (2) is carried out by a screw (8) which is threaded inside the aforementioned dental implant (2), as shown in Figure 1.

The mounting assembly comprises a primary element (4) with a generally frustoconical shape having a substantially spherical cavity (42) and is provided with a threaded through hole (41) through which a screw (5) provided with a threaded section (51) and a spherical head (52) located at one end can be inserted. Such geometry of the spherical head (52) enables it to be easily inserted into the inner region of the connection section (11) of the support piece (1) and the wall which forms the substantially spherical cavity of the primary element (4) is arranged outside the connection section. In this way, the mounting assembly can be rotatively coupled and without the risk of separation of the parts involved in the action of rotation during an assembly or operation condition, as prior refolding of the flexible sections would be necessary in order to extract the primary element (4), which is not possible due to the presence of the spherical head (52).

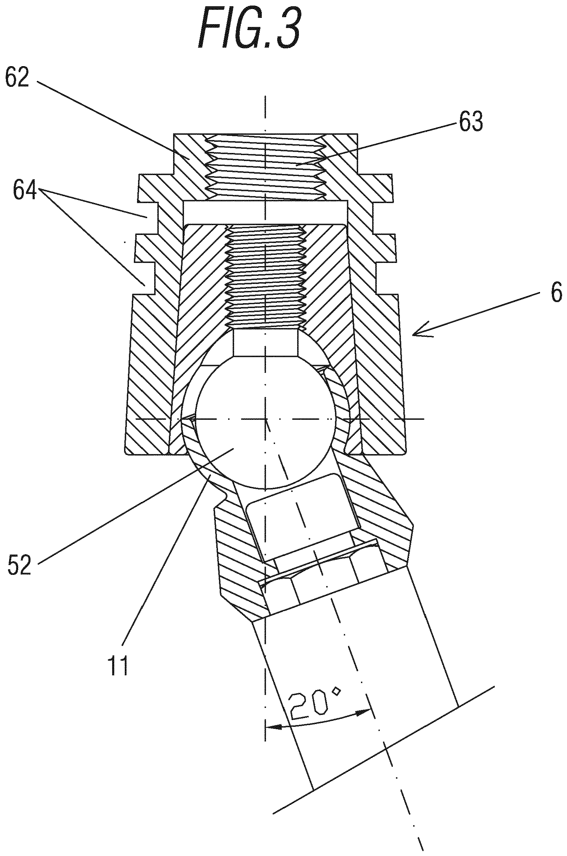

In Figures 1 and 3, a sleeve (6) has been included in the prosthetic attachment which externally surrounds the primary element (4) comprising a cylindrical lateral wall (61) and a base (62) (located at the top based on the representation of the drawing) provided with a through threaded bore (63) and wherein the outer face of the cylindrical lateral wall (61) has a series of annular recesses (64).

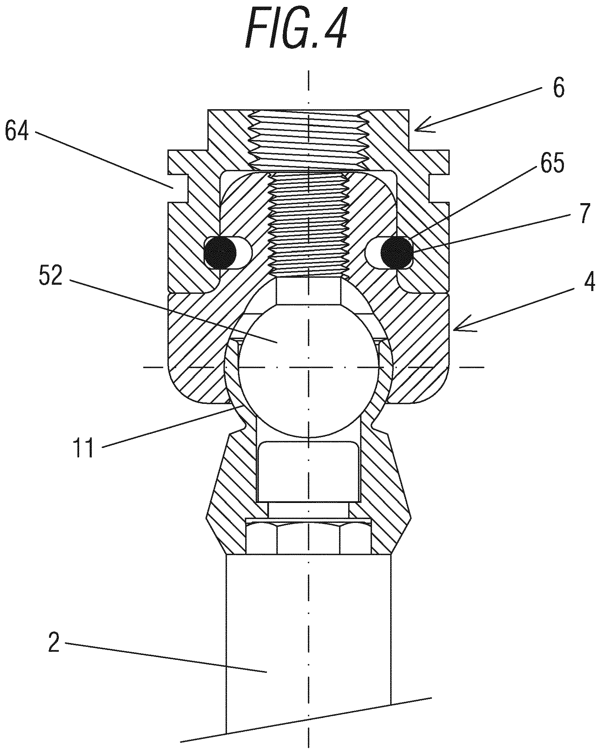

In Figure 4, the prosthetic attachment is provided with an elastic ring (7) having a toroidal section located in an annular housing (65) formed on the inner face of the sleeve (6), the design of the sleeve and the primary element being different with respect to Figure 1.

In Figures 1 to 5 it can be seen how the lower section (12) of the support piece (1) has a through hole (13) which longitudinally crosses the whole support piece (1) which makes it possible to fit the screw (8), this through hole (13) having several sections of different diameters which enables the screw head (8) to be positioned and secured in place.

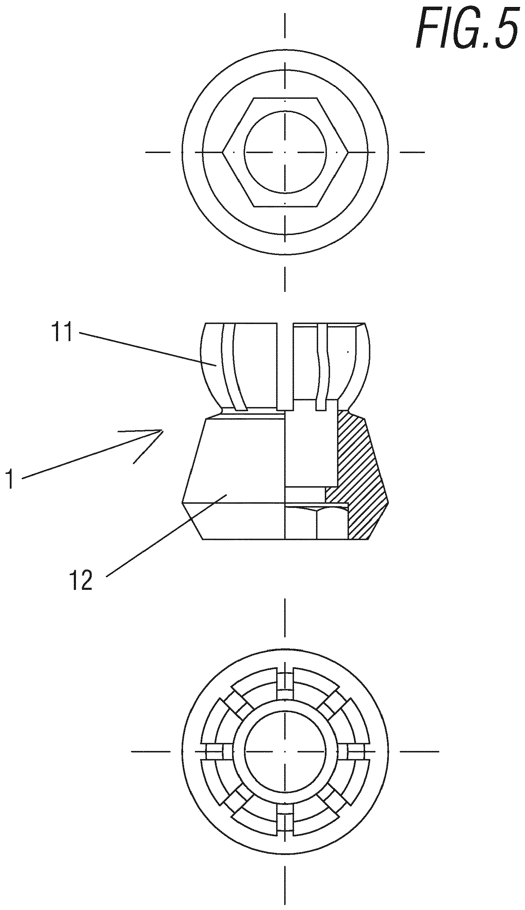

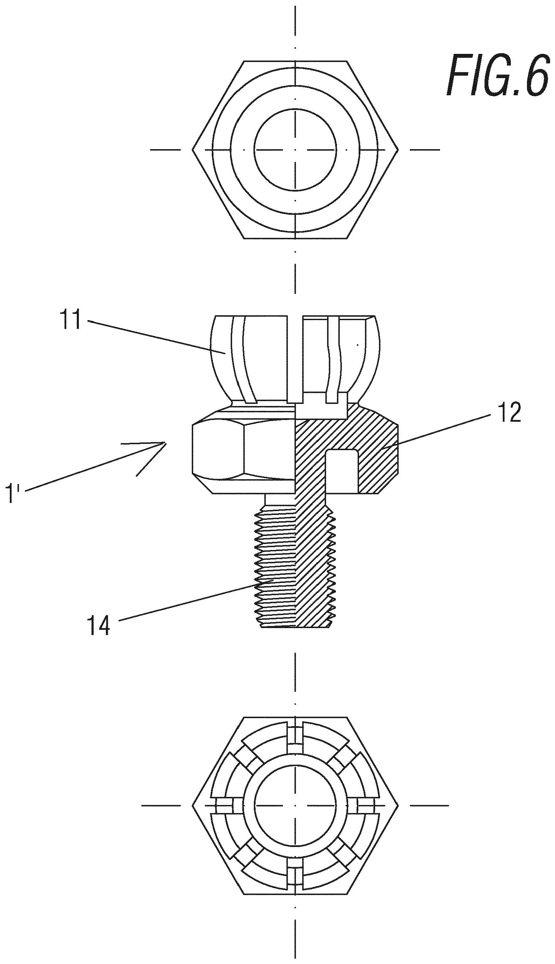

Figure 6 shows a second embodiment of the support piece (1), which unlike that shown in Figure 5 has a threaded extension (14) with a polygonal contour (hexagonal in this particular case) which projects in the opposite direction to the connection section, such that the screw (8) is not required.

The following explains in greater detail how the attachment described above is assembled and operated.

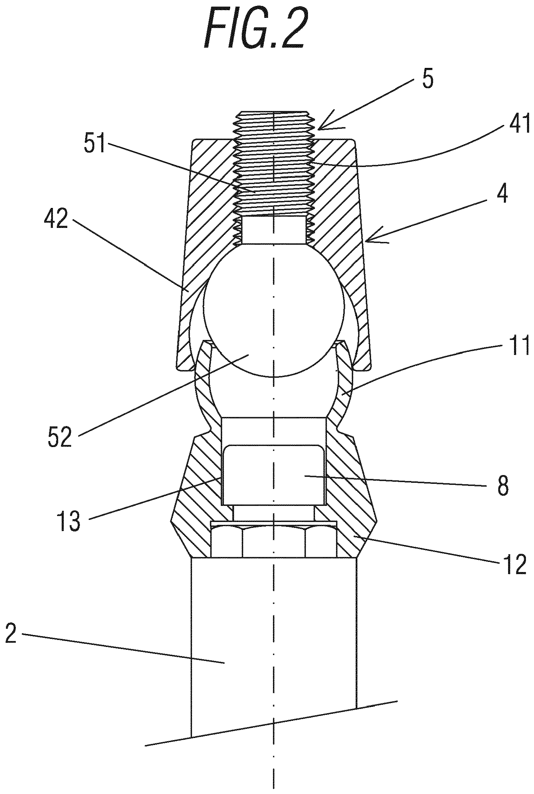

Firstly, the support piece is attached (1) to the dental implant (2) by means of a screw (8) whose head abuts a shoulder formed in the through hole (13). Then, having arranged the screw (5) in the position shown in Figure 2, by applying a little pressure, the substantially spherical cavity of the primary element (4) is coupled to the connection section (11) of the support piece (1), enabling the primary element (4) to orbit at a maximum angle, for example in a range from 20-25° in any direction so the prosthetic structure (3) can be most suitably positioned in the buccal cavity.

At this point, the spherical head screw (5) is displaced (by screwing) until the spherical head (52) is fully embedded in the connection section (11), with the possibility of applying further pressure by using a conventional tool on a screw (5) until it is immobilised. Finally, the sleeve (6) is positioned on the primary element (4) by means of fixing it to the latter.

## Claims

1. The invention relates to a prosthetic attachment comprising a support piece (1) which can be fixed in a dental implant (2) and a mounting assembly which can be coupled to a prosthetic structure (3), wherein the joint between the support piece (1) and the mounting assembly is a ball-and-socket type joint, wherein the support piece (1) includes a substantially spherical connection section (11) comprising a plurality of radially distributed flexible petals or sectors,
wherein the mounting assembly comprises a primary element (4) and a screw (5) provided with a spherical head (52), wherein the primary element (4) has a substantially spherical cavity and a threaded through hole (41) through which the screw (5) is insertable,
such that the spherical head (52) can be introduced into the inner region of the connection section of the support piece (1) and the wall that forms the substantially spherical cavity of the primary element (4) can be adjusted to partially and externally surround the connection section of the support piece (1), such that the mounting assembly is rotatively coupled and cannot be detached from the support piece (1).

2. A prosthetic attachment according to claim 1, **characterised by** the fact that it includes a sleeve (6) which externally surrounds the primary element (4), comprising a cylindrical lateral wall (61) and a base (62) provided with a threaded bore and wherein the outer face of the cylindrical lateral wall has annular recesses (64).

3. A prosthetic attachment according to claim 2, **characterised by** the fact that it provides an elastic ring (7) located in an annular housing formed on the inner face of the sleeve (6).

4. A prosthetic attachment according to claim 1, **characterised by** the fact that the primary element (4) has a generally frustoconical shape.

5. A prosthetic attachment according to claims 2 and 4, **characterised by** the fact that the inner face of the sleeve (6) has an inclination with respect to the longitudinal axis of the sleeve (6) which is suitable for complementary engagement of the primary element (4) inside said sleeve (6).

6. A prosthetic attachment according to claim 1 **characterised by** the fact that the support piece (1) has a through hole which longitudinally crosses the whole support piece (1).

7. A prosthetic attachment according to claim 1 **characterised by** the fact that the support piece (1) has a threaded extension (14) which projects in the opposite direction to the connection section (11).

8. A prosthetic attachment according to claim 7 **characterised by** the fact that the threaded extension (14) has a polygonal contour in plan view.

## Patentansprüche

1. Prothesenaufbau umfassend ein Trägerteil (1), welches in ein Zahnimplantat (2) fixiert werden kann, und eine Montagebaugruppe, welche an eine prothetische Struktur (3) gekoppelt werden kann, wobei das Gelenk zwischen dem Trägerteil (1) und der Montagebaugruppe ein Gelenk der Art eines Kugelgelenks ist, wobei das Trägerteil (1) einen im Wesentlichen sphärischen Verbindungsabschnitt (11) beinhaltet, umfassend eine Vielzahl von radial verteilten flexiblen Blättern oder Sektoren,
wobei die Montagebaugruppe ein Primärelement (4) und eine Schraube (5), mit einem sphärischen Kopf (52) versehen, umfasst,
wobei das Primärelement (4) eine im Wesentlichen sphärische Vertiefung und ein Durchgangsgewindeloch (41), durch welches die Schraube (5) eingesetzt werden kann, umfasst,
so dass der sphärische Kopf (52) in den inneren Bereich des Verbindungsabschnitts des Trägerteils (1) eingeführt werden kann und die Wand, welche die im Wesentlichen sphärische Vertiefung des Primärelements (4) bildet, kann daran angepasst werden den Verbindungsabschnitt des Trägerteils (1) teilweise und äußerlich zu umgeben, so dass die Montagebaugruppe rotierend gekoppelt ist und nicht vom Trägerteil (1) gelöst werden kann.

2. Prothesenaufbau nach Anspruch 1, **dadurch gekennzeichnet, dass** er eine Hülse (6), welche das Primärelement (4) äußerlich umgibt, umfassend eine zylindrische Seitenwand (61) und eine Basis (62), mit ein Gewindeloch versehen, beinhaltet und wobei die Außenseite der zylindrischen Seitenwand ringförmige Ausnehmungen (64) aufweist.

3. Prothesenaufbau nach Anspruch 2, **dadurch gekennzeichnet, dass** er einen elastischen Ring (7), welches sich in einem auf der Innenseite der Hülse (6) gebildeten ringförmigen Gehäuse befindet, bereitstellt.

4. Prothesenaufbau nach Anspruch 1, **dadurch gekennzeichnet, dass** das Primärelement (4) eine grundsätzlich kegelstumpfförmige Form aufweist.

5. Prothesenaufbau nach den Ansprüchen 2 und 4, **dadurch gekennzeichnet, dass** die Innenseite der Hülse (6) eine Neigung in Bezug auf die Längsachse der Hülse (6), welche für einen ergänzenden Eingriff des Primärelements (4) innerhalb der genannten Hülse (6) geeignet ist, aufweist.

6. Prothesenaufbau nach Anspruch 1, **dadurch gekennzeichnet, dass** das Trägerteil (1) ein Durchgangsloch, welches das ganze Trägerteil (1) der Länge nach durchquert, aufweist.

7. Prothesenaufbau nach Anspruch 1, **dadurch gekennzeichnet, dass** das Trägerteil (1) eine gewindete Verlängerung (14), welche in die entgegengesetzte Richtung zum Verbindungsabschnitt (11) ragt, aufweist.

8. Prothesenaufbau nach Anspruch 7, **dadurch gekennzeichnet, dass** die gewindete Verlängerung (14) einen mehreckigen Umriss in Draufsicht aufweist.

## Revendications

1. Pilier de prothèse comprenant une pièce de support (1) qui peut être fixée dans un implant dentaire (2) et un ensemble de montage qui peut être couplé à une structure de prothèse (3), dans lequel l'articulation entre la pièce de support (1) et l'ensemble de montage est une articulation de type sphéroïde, dans lequel la pièce de support (1) comporte une section de connexion essentiellement sphérique (11) comprenant une pluralité de pétales ou secteurs flexibles radialement distribués,
dans lequel l'ensemble de montage comprend un élément primaire (4) et une vis (5) pourvue d'une tête sphérique (52), dans lequel l'élément primaire (4) possède une cavité essentiellement sphérique et un trou traversant fileté (41) à travers lequel la vis peut être insérée,
de manière que la tête sphérique (52) peut être introduite dans la région intérieure de la section de connexion de la pièce de support (1) et la paroi qui forme la cavité essentiellement sphérique de l'élément primaire (4) peut être ajustée pour entourer partiellement et extérieurement la section de connexion de la pièce de support (1) de manière que l'ensemble de montage est couplé en rotation et ne peut pas être détaché de la pièce de support (1).

2. Pilier de prothèse selon la revendication 1, **caractérisé en ce qu'**il comporte un manchon (6) qui entoure extérieurement l'élément primaire (4) comprenant une paroi cylindrique latérale (61) et une base (62) pourvue d'un alésage fileté et dans lequel la face extérieure de la paroi cylindrique latérale possède des évidements annulaires (64).

3. Pilier de prothèse selon la revendication 2, **caractérisé en ce qu'**il comporte une bague élastique (7) située dans un logement annulaire formé sur la face intérieure du manchon (6).

4. Pilier de prothèse selon la revendication 1, **caractérisé en ce que** l'élément primaire (4) possède une forme généralement tronconique.

5. Pilier de prothèse selon les revendications 2 et 4, **caractérisé en ce que** la face intérieure du manchon (6) possède une inclination par rapport à l'axe longitudinal du manchon (6) qui est approprié pour l'engagement complémentaire de l'élément primaire (4) à l'intérieur dudit manchon (6).

6. Pilier de prothèse selon la revendication 1, **caractérisé en ce que** la pièce de support (1) possède un trou traversant qui traverse longitudinalement toute la pièce de support (1).

7. Pilier de prothèse selon la revendication 1, **caractérisé en ce que** la pièce de support (1) possède une extension filetée (14) qui se projette dans la direction opposée à la section de connexion (11).

8. Pilier de prothèse selon la revendication 7, **caractérisé en ce que** l'extension filetée (14) possède un contour polygonal dans une vue en plan.
